# EUROPÄISCHE PATENTSCHRIFT

(11) **EP 4 149 774 B1**
(45) Veröffentlichungstag und Bekanntmachung des Hinweises auf die Patenterteilung: **05.06.2024**
(21) Anmeldenummer: 21721393.3
(22) Anmeldetag: 07.04.2021
(51) Int. Cl.: B60H 1/00

(54) **KLIMAANLAGE**
AIR-CONDITIONING SYSTEM
SYSTÈME DE CLIMATISATION

(30) Priorität: 13.05.2020 DE 102020002860
(43) Veröffentlichungstag der Anmeldung: 22.03.2023
(73) Patentinhaber: Truma Gerätetechnik GmbH & Co. KG, 85640 Putzbrunn (DE)
(72) Erfinder: PRESLER, Eugen, 85640 Putzbrunn (DE)
(74) Vertreter: Prinz & Partner mbB
(86) Internationale Anmeldenummer: PCT/EP2021/000034
(87) Internationale Veröffentlichungsnummer: WO 2021/228424

(56) Entgegenhaltungen:
- EP-A1- 2 965 934
- DE-A1- 10 121 286
- DE-A1-102010 029 766
- DE-A1-102011 113 446
- DE-A1-102015 200 849
- FR-A1- 3 040 916

## Beschreibung

Die vorliegende Erfindung betrifft eine Klimaanlage zum Kühlen eines Raumes. Vorzugweise handelt es sich um eine auf dem Dach eines Fahrzeugs (z. B. eines Wohnmobils oder eines Wohnwagens) zu befestigende Klimaanlage.

Das der Luftkühlung zugrundeliegende Prinzip der Kälteerzeugung mittels eines Kühlkreislaufs ist seit langem bekannt und beispielsweise in der WO 2007/042065 A1 beschrieben. Vorhanden sind in solchen Klimaanlagen zumeist zwei Gebläse und zwei Wärmetauscher: Ein Gebläse und ein zugeordneter Wärmetauscher gehören zum Verdampfer, in dem die Luft des zu kühlenden Raumes durch die Wechselwirkung mit dem Kältemittel abgekühlt wird. Ein weiteres Gebläse und ein zugeordneter Wärmetauscher gehören zum Verflüssiger, in welchem thermische Energie des Kältemittels auf die Umgebungsluft übertragen und somit abgeführt wird.

Klimaanlagen oder Luftverteiler für Kraftfahrzeuge lassen sich beispielsweise der DE 10 2009 028 522 B4, der US 2009/0239463 A1, der US 4,712,611, der US 4,991,646, der US 3,528,607 oder der CN 204006805 U entnehmen.

Das Dokument DE 10 2015 200849 A1 zeigt eine weitere relevante Klimaanlage.

Die der Erfindung zugrundeliegende Aufgabe besteht daher darin, eine Klimaanlage mit gegenüber dem Stand der Technik verbesserten Eigenschaften vorzuschlagen.

Die Erfindung löst die Aufgabe durch eine Klimaanlage zum Kühlen von Luft, gemäß Anspruch 1, mit einem Verdampfer-Wärmetauscher, wobei die zu kühlende Luft den Verdampfer-Wärmetauscher passiert, wobei vor dem Verdampfer-Wärmetauscher eine Verteilerstruktur angeordnet ist, und wobei die Verteilerstruktur die zu kühlende Luft im Wesentlichen gleichmäßig über eine Seite des Verdampfer-Wärmetauschers verteilt.

Der Verdampfer-Wärmetauscher ist ein Teil des Verdampfers, in dem die thermische Energie der zu kühlenden Luft auf das Kühlmittel übertragen wird, auf dass sich die Kühlung der Luft ergibt. Hierfür wird die Luft durch den Verdampfer-Wärmetauscher hindurchgeführt. Bei der Klimaanlage handelt es sich beispielsweise um eine sogenannte Dachklimaanlage, die also beispielsweise auf dem Dach eines Wohnwagens oder eines Wohnmobils befestigt wird. Um die Kühlleistung zu optimieren, ist hier eine Verteilerstruktur vorgesehen, die die zu kühlende Luft möglichst gleichmäßig über eine Seite des Verdampfer-Wärmetauscher verteilt. Diese Seite wird somit von der zu kühlenden Luft angeströmt und ist auch die Seite, die der vorgenannten Verteilerstruktur zugewandt ist. Indem die zugeführte Luft gleichmäßig verteilt wird, kann somit auch die Wechselwirkung mit dem Kühlmittel, das den Verdampfer-Wärmetauscher durchströmt, optimiert werden.

Eine Ausgestaltung sieht vor, dass die Klimaanlage ein Verdampfer-Gebläse aufweist, und dass das Verdampfer-Gebläse relativ zum Verdampfer-Wärmetauscher gegenüber der Verteilerstruktur angeordnet ist. In dieser Ausgestaltung zieht ein Verdampfer-Gebläse die zu kühlende Luft durch den Verdampfer-Wärmetauscher hindurch. Somit strömt die zu kühlende Luft zunächst in den Raum zwischen Verteilerstruktur und Verdampfer-Wärmetauscher, passiert den Verdampfer-Wärmetauscher und wird dann durch das Verdampfer-Gebläse geführt. Oder mit anderen Worten: Der Verdampfer-Wärmetauscher befindet sich zwischen der Verteilerstruktur und dem Verdampfer-Gebläse.

Die Erfindung beinhaltet, dass die Verteilerstruktur über mindestens eine Ausbuchtung verfügt, die sich in Richtung des Verdampfer-Wärmetauschers erhebt. Die Verteilerstruktur wird in dieser Ausgestaltung dahingehend konkretisiert, dass sie über eine Art von Erhebung verfügt, die sich Richtung des Verdampfer-Wärmetauschers ausdehnt. Diese Ausbuchtung oder Delle reduziert damit auch den Abstand gegenüber dem Verdampfer-Wärmetauschers. Die Verteilerstruktur kommt daher im Bereich der Ausbuchtung dem Verdampfer-Wärmetauschers näher und reduziert damit den Raum für die zu kühlende Luft vor dem Verdampfer-Wärmetauscher. In einer Ausgestaltung handelt es sich bei der Ausbuchtung um eine Art von Welle, deren Flanken sich in Richtung der Seiten erstrecken, von denen die zu kühlende Luft herangeführt wird. In einer Ausgestaltung ist die Ausbuchtung symmetrisch zu einer Mitte ausgestaltet. In einer alternativen Ausgestaltung ist die Ausbuchtung asymmetrisch ausgeführt. In einer Ausgestaltung wird der Raum vor dem Verdampfer-Wärmetauscher von zwei Seiten mit der zu kühlenden Luft angeströmt und die Ausbuchtung befindet sich im Wesentlichen zwischen diesen beiden Anströmungsseiten.

Eine Ausgestaltung sieht vor, dass die Ausbuchtung derartig ausgestaltet und relativ zum Verdampfer-Wärmetauscher angeordnet ist, dass in einem Bereich einer maximalen Erstreckung der Ausbuchtung ein Abstand zwischen der Ausbuchtung und dem Verdampfer-Wärmetauscher um mindestens 50% kleiner als in anderen Bereichen der Ausbuchtung ist.

Die Ausbuchtung reduziert den Abstand zu dem Verdampfer-Wärmetauscher, durch den die zu kühlende Luft geführt wird. In dieser Ausgestaltung reduziert sich der Abstand auf mehr als die Hälfte in dem Bereich vor der maximalen Erstreckung. Die maximale Erstreckung ist dabei die Spitze oder je nach Ausgestaltung der Schwerpunkt der Ausbuchtung.

Die Erfindung beinhaltet, dass die Ausbuchtung derartig ausgestaltet und relativ zum Verdampfer-Wärmetauscher angeordnet ist, dass ein Abstand zwischen der Ausbuchtung und dem Verdampfer-Wärmetauscher entlang eines Höhenverlaufs des Verdampfer-Wärmetauschers abnimmt. In dieser Ausgestaltung ist die Ausbuchtung derartig entlang eines Höhenverlaufs des Verdampfer-Wärmetauschers ausgestaltet und angeordnet, sodass sich der Raum vor dem Verdampfer-Wärmetauscher nach oben verengt. Oben sei hier fort von der Grundfläche der Klimaanlage verstanden. Dies ist die Grundfläche, die im verbauten Zustand beispielweise auf einem Dach eines beweglichen Fahrzeugs aufliegt. Der Raum, in den die zu kühlende Luft einströmt, ist daher im Fußbereich des Verdampfer-Wärmetauschers größer als im Kopfbereich.

Eine Ausgestaltung sieht vor, dass die Klimaanlage ein Gehäuse aufweist, dass sich der Verdampfer-Wärmetauscher in dem Gehäuse befindet, und dass die Ausbuchtung ein Teil des Gehäuses ist. Das Gehäuse ist in dieser Ausgestaltung derartig ausgeführt, sodass es über die Verteilerstruktur verfügt.

Die Erfindung beinhaltet, dass eine maximale Erstreckung der Ausbuchtung innerhalb einer Projektion einer Wirkfläche des Verdampfer-Gebläses angeordnet ist. In dieser Ausgestaltung ist die Ausbuchtung als eine Art von Welle oder Düne ausgeführt. Die Spitze oder je nach Ausgestaltung der Schwerpunkt dieser Welle befindet sich dabei in dem Bereich entlang der Wirkfläche des Verdampfer-Gebläses. Somit befindet sich der geringste Raum für die zu kühlende Luft vor dem Verdampfer-Wärmetauscher in der Bewegungsrichtung vor der Wirkfläche des Verdampfer-Gebläses.

In einer weiteren Ausgestaltung verfügt die Klimaanlage über ein Gehäuse, wobei der Verdampfer-Wärmetauscher auf einer Auflagefläche des Gehäuses angeordnet ist, und wobei die Auflagefläche mindestens zwei Rippen aufweist.

Der Verdampfer-Wärmetauscher ist ein Teil des Verdampfers, in dem die thermische Energie der zu kühlenden Luft auf das Kühlmittel übertragen wird. Hierfür wird die Luft durch den Verdampfer-Wärmetauscher hindurchgeführt. Der Verdampfer-Wärmetauscher ist in einem Gehäuse angeordnet und ruht dabei auf einer Auflagefläche. Insofern es sich bei der Klimaanlage um eine sogenannten Dachklimaanlage handelt, die also beispielsweise auf dem Dach eines Wohnwagens oder eines Wohnmobils befestigt wird, befindet sich die Auflagefläche in Richtung des Dachs und bildet quasi einen Teil des Bodens der Klimaanlage. Die Auflagefläche weist keine flache oder plane Form auf, sondern verfügt über mehrere - zumindest zwei - Rippen, auf denen der Verdampfer-Wärmetauscher steht. Ein Vorteil der Rippen besteht in der Steigerung der Kühlleistung, indem verhindert wird, dass Luft unter den Verdampfer-Wärmetauscher hindurchströmen kann. Alternativ oder ergänzend bewirken die Rippen, dass solche Luft von unten hinein in den Verdampfer-Wärmetauscher geleitet wird. Die Rippen erhöhen somit den Widerstand für die Luft, die unterhalb des Verdampfer-Wärmetauscher strömen könnte und/oder wirken als Komponenten, die die Luft führen. Weiterhin bewirkt die Wechselwirkung der Luft mit dem Verdampfer-Wärmetauscher eine Trocknung der Luft. Die somit aus der Luft entfernte Feuchtigkeit kondensiert und das Kondenswasser sammelt sich unterhalb des Verdampfer-Wärmetauschers. Hierbei sorgen die Rippen, dass das Kondenswasser in die zwischen die Rippen befindlichen Bereiche - also in die Täler - abtropft. Überdies ergibt sich durch die Rippen auch der Vorteil, dass die ungewünschte und unter dem Verdampfer-Wärmetauscher entlang strömende Luft kein oder nur sehr wenig Kondenswasser aufnehmen und fortführen kann.

Die folgenden Ausgestaltungen beschäftigen sich mit der Auflagefläche.

Eine Ausgestaltung besteht darin, dass die Rippen derartig ausgestaltet sind, sodass die Rippen Luft unterhalb des Verdampfer-Wärmetauschers hinein in den Verdampfer-Wärmetauscher leiten. In dieser Ausgestaltung bewirken die Rippen somit nicht nur eine Erhöhung des Widerstands für die Luft unterhalb des Verdampfer-Wärmetauschers, sondern sie leiten auch die Luft gezielt hinein in den Verdampfer-Wärmetauschers. Die Bewegungsrichtung der Luft wird somit gezielt umgelenkt. Dies ist vorzugsweise durch die Ausformung derjenigen Flanken der Rippen möglich, die von dem Luftstrom angeströmt werden. Weiterhin ist hierfür vorzugsweise der Verdampfer-Wärmetauscher in Richtung der Auflagefläche offen ausgestaltet, sodass die Luft in ihn von unten hineinströmen kann.

Eine Ausgestaltung sieht vor, dass das Gehäuse und die Auflagefläche derartig ausgestaltet und aufeinander abgestimmt sind, dass alternativ mindestens zwei Verdampfer-Wärmetauscher mit unterschiedlichen Tiefen in dem Gehäuse fixierbar sind. In dieser Ausgestaltung ist es möglich, ein Gehäuse für unterschiedliche Varianten der Klimaanlage zu verwenden. Die Klimaanlagen unterscheiden sich dabei zumindest in Bezug auf die Verdampfer-Wärmetauscher, die unterschiedliche Tiefen aufweisen und daher auch über unterschiedliche Kühlleistungen verfügen. Die Tiefe sei dabei die Erstreckung entlang der Richtung, in die die Luft durch den Verdampfer-Wärmetaucher geführt wird. Daher erlaubt auch eine größere Tiefe eine größere Kühlleistung.

Eine Ausgestaltung besteht darin, dass in dem Verdampfer-Wärmetauscher Röhren für das Führen eines Kältemittels angeordnet sind, und dass die Röhren in mindestens zwei Reihen angeordnet sind. Um eine möglichst große Wirkoberfläche zu erzeugen, wird das Kühlmittel durch eine Röhrenstruktur hindurchgeführt. Die Röhren sind dabei in mehreren und zumindest zwei Reihen übereinander angeordnet, sodass sich für das Kühlmittel jeweils ein mäandrierender Verlauf ergibt. In einer Ausgestaltung sind dabei die Röhren der einzelnen Reihen an den Seiten des Verdampfer-Wärmetauschers für das Kühlmittel miteinander verbunden.

Die Reihen der Röhren sind in einer Ausgestaltung in Richtung der durch den Verdampfer-Wärmetauscher geführten Luft hintereinander angeordnet, sodass jede Reihe eine weitere Wechselwirkung in Bezug auf die Abkühlung der Luft bedeutet. Mit der Anzahl der hintereinander angeordneten Reihen an Röhren steigt dabei auch die Tiefe des Verdampfer-Wärmetauschers.

Eine Ausgestaltung besteht darin, dass in der Auflagefläche ein Verdampfer-Wärmetauscher mit einer maximalen Tiefe fixierbar ist, dass der maximalen Tiefe eine maximale Anzahl an Reihen der Röhren zugeordnet ist, und dass die Anzahl der Rippen zumindest gleich der maximalen Anzahl der Reihen der Röhren ist. In dieser Ausgestaltung ist das Gehäuse so ausgestaltet, dass es einen Typ von Verdampfer-Wärmetauscher mit einer maximalen Tiefe aufnehmen kann. Andere Typen, die kürzer sind, können entsprechend auch aufgenommen werden. Bis auf die Tiefe gleichen sich daher die Abmessungen der unterschiedlichen Typen der Verdampfer-Wärmetauscher. Die maximale Tiefe ist mit einer maximalen Anzahl von Reihen an Röhren verbunden. Dabei ist die Anzahl der Rippen zumindest gleich der maximalen Anzahl von Reihen. Damit geht einher, dass jeder Reihe eine Rippe zugeordnet ist. In einer Ausgestaltung bewirkt dies, dass jede Rippe die Luft in Richtung der zugeordneten Reihe von Röhren umlenkt. In einer Ausgestaltung ist die Anzahl der Rippen genau gleich der maximalen Anzahl der Reihen.

In einer Ausgestaltung sind die Rippen im Wesentlichen identisch ausgestaltet. Dies vereinfacht die Fertigung. In einer alternativen Ausgestaltung sind die Rippen unterschiedlich ausgeführt. Dabei wird darauf Rücksicht genommen, dass die Menge der umzulenkenden Luft entlang der generellen Strömungsrichtung jeweils von Rippe zu Rippe abnimmt.

Eine Ausgestaltung sieht vor, dass die Rippen im Wesentlichen senkrecht zu einer Durchströmungsrichtung der Luft durch den Verdampfer-Wärmetauscher orientiert sind. Die Oberkanten der Rippen verlaufen in dieser Ausgestaltung senkrecht zur Durchströmungsrichtung. Die Rippen haben dabei in einer Ausgestaltung einen dreieckigen Querschnitt, wobei in einer Ausgestaltung die seitlichen Flanken gekrümmt sind.

Eine Ausgestaltung besteht darin, dass die Auflagefläche als Auffangwanne für Kondenswasser dient. Das Kondenswasser bildet sich an dem Verdampfer-Wärmetauscher und tropft durch die Schwerkraft nach unten und damit auf die Auflagefläche, die damit in dieser Ausgestaltung auch als Auffangwanne dient. Für diesen Zweck und das Abführen des Kondenswassers sind in einer Ausgestaltung entsprechende Aussparungen zum Abfließen vorgesehen.

Gemäß einer weiteren Ausgestaltung ist vorgesehen, dass die Klimaanlage einen Verflüssiger-Wärmetauscher, ein Verflüssiger-Gebläse und ein Gehäuse aufweist, wobei der Verflüssiger-Wärmetauscher thermische Energie der zu kühlenden Luft auf eine Außenluft überträgt, wobei das Gehäuse mindestens einen Luftzugang sowie einen Luftausgang für die Außenluft aufweist, wobei das Verflüssiger-Gebläse die Außenluft über den Luftzugang in das Gehäuse einbringt und über den Luftausgang ausbringt, und wobei der Luftausgang derartig ausgestaltet ist, dass die Außenluft sich nach dem Verlassen des Luftausgangs möglichst geradlinig weiterbewegt.

Die thermische Energie der zu kühlenden Luft wird zunächst auf das Kühlmittel und dann auf die Außenluft übertragen. Die Außenluft stammt dabei z. B. aus der Umwelt um den Raum herum, dessen Luft durch die Klimaanlage gekühlt werden soll. Handelt es sich bei der Klimaanlage beispielsweise um eine sogenannte Dachklimaanlage, die z. B. auf dem Dach eines Wohnwagens oder eines Wohnmobils montiert wird, so wird die Luft im Innenraum des Wohnwagens bzw. Wohnmobils gekühlt und die Wärme als thermische Energie wird auf die Umgebungsluft um den Wohnwagen bzw. das Wohnmobil herum übertragen. Für diesen Energietransfer sind der Verflüssiger-Wärmetauscher und das Verflüssiger-Gebläse vorgesehen. Der Verflüssiger-Wärmetauscher führt das Kühlmittel und erlaubt die Wechselwirkung mit der Außenluft, indem die Außenluft durch den Verflüssiger-Wärmetauscher hindurchgeführt wird und dabei Wärme vom Kühlmittel aufnimmt. Das Verflüssiger-Gebläse sorgt für die Bewegung der Außenluft hinein in das Gehäuse der Klimaanlage und nach der Wechselwirkung mit dem Verflüssiger-Wärmetauscher für die Bewegung wieder heraus aus dem Gehäuse. Das Gehäuse verfügt dabei über mindestens einen Luftausgang, der so ausgestaltet ist, dass die Außenluft nach dem Verlassen des Luftausgangs und damit auch des Gehäuses sich möglichst geradlinig weiterbewegt. Damit soll erzielt werden, dass die Bewegungsenergie der erwärmten Außenluft für einen möglichst weiten Weg fort vom Gehäuse verwendet wird. Dadurch soll wiederum verhindert werden, dass ausgerechnet die erwärmte Außenluft wieder von der Klimaanlage angesaugt wird. Dies steigert die Wirkleistung.

Die folgenden Ausgestaltungen beziehen sich auf diesen Verflüssiger-Teil der Klimaanlage, in welchem die Außenluft dem Abtransport der Wärme dient.

Eine Ausgestaltung sieht vor, dass das Gehäuse mehrere Luftausgänge aufweist, dass die Luftausgänge nur auf einer Ausblasseite des Gehäuses münden, und dass die Luftausgänge geradlinig und im Wesentlichen parallel zueinander münden. In dieser Ausgestaltung wird die Außenluft nach dem Passieren des Verflüssiger-Wärmetauscher durch mehrere Luftausgänge aus dem Gehäuse hinausgeführt. Die Luftausgänge sind dabei alle so ausgestaltet, dass die Außenluft sich nach dem Verlassen der Luftausgänge im Wesentlichen nur geradlinig fortbewegt. Die Luftgänge verlaufen so, dass sie im Wesentlichen parallel zueinander münden. Daher werden die Luftströme, die durch sie hindurchströmen auch jeweils parallel zueinander fort vom Gehäuse geführt. Dies soll ebenfalls Verwirbelungen verhindern und die Gefahr minimieren, dass die erwärmte Außenluft eingesogen wird.

Eine Ausgestaltung besteht darin, dass die Luftausgänge radial um das Verflüssiger-Gebläse herum ihren Anfang nehmen. Das Verflüssiger-Gebläse hat eine im Wesentlichen kreisförmige Außenkontur, der entlang die Schaufeln des Gebläses die Luft nach außen tragen. Angrenzend an diese Außenkontur (oder je nach Ausgestaltung in einer dazu versetzten Ebene) nehmen die Luftausgänge ihren Anfang.

Eine Ausgestaltung sieht vor, dass sich zwischen den Luftausgängen Trägerkomponenten des Gehäuses befinden, und dass die Trägerkomponenten den Verflüssiger-Wärmetauscher zumindest teilweise tragen. Das Gehäuse dient in dieser Ausgestaltung der Stabilisierung der Klimaanlage, indem sich zwischen den Luftausgängen Trägerkomponenten befinden, auf denen der Verflüssiger-Wärmetauscher zumindest teilweise ruht. Es befinden sich also Abschnitte zwischen den Luftausgängen, die ausreichend stabil für diese Funktion ausgeführt sind. Die Trägerkomponenten erlauben es auch, die Luftausgänge hinreichend schmal zu machen, so dass ein Eingriffsschutz gegeben ist.

Eine Ausgestaltung besteht darin, dass das Gehäuse mehrere Luftzugänge aufweist, und dass die Luftzugänge mit drei Einzugsseiten des Gehäuses verbunden sind. Das Gehäuse verfügt in einer Ausgestaltung über vier Seiten und hat im Wesentlichen eine rechteckige Grundform. In dieser Ausgestaltung gelangt von drei Seiten die Außenluft für den Abtransport der Wärme in die Klimaanlage hinein. Dies sind vorzugsweise eine Stirnseite sowie die beiden Längsseiten. In einer Ausgestaltung erstrecken sich die Luftzugänge über fast die gesamte Stirnseite und ragen sie an den Längsseiten möglichst nahe an die Stirnseite heran. In einer Ausgestaltung dient die Stirnseite nicht nur als Einzugsseite, sondern auch als Ausblasseite.

Eine Ausgestaltung sieht vor, dass das Gehäuse mehrere Luftzugänge und mehrere Luftausgänge aufweist, dass die Luftzugänge und die Luftausgänge sich auf unterschiedlichen Ebenen entlang einer Höhe der Klimaanlage befinden, und dass die Ebene der Luftzugänge oberhalb der Ebene der Luftausgänge liegt. Die hier in Bezug auf die Ebenen betrachteten Luftzugänge und Luftausgänge befinden sich in einer Ausgestaltung auf einer gemeinsamen Seite des Gehäuses, die vorzugweise eine hintere Stirnseite des Gehäuses ist. Die Ebenen seien dabei verstanden als senkrecht verlaufend zu einer Höhe der Klimaanlage. Dieser Höhenverlauf ergibt sich beispielsweise im verbauten Zustand entlang der Schwerkraft, sodass also beispielsweise relativ zur Auflagefläche der Klimaanlage eine Ebene höher als die anderen Ebene liegt. Die Auflagefläche ist beispielsweise ein Dach eines Wohnwagens oder eines Wohnmobils. Die Ebene der Luftausgänge befindet sich dabei unterhalb der Ebene der Luftzugänge. Die Ebene der Luftausgänge befindet sich in einer Ausgestaltung möglichst tief, sodass auch die Außenluft möglichst in Dachnähe oder allgemein in Nähe zur Auflagefläche der Klimaanlage ausgestoßen wird.

Eine Ausgestaltung besteht darin, dass der Verflüssiger-Wärmetauscher die Form des Großbuchstabens "U" aufweist, und dass das Verflüssiger-Gebläse in der U-Form angeordnet ist. Der Verflüssiger-Wärmetauscher hat in dieser Ausgestaltung eine gebogene Form und umfasst einen Innenbereich. In diesem Innenbereich befindet sich in einer Aus-gestaltung das Verflüssiger-Gebläse. Die Spitze des U ist dabei in einer Ausgestaltung der Stirnseite der Klimaanlage zugewandt, sodass die beiden Flanken des U sich entlang der beiden Längsseiten erstrecken.

Gemäß einer Ausgestaltung befinden sich zwischen dem Gehäuse und dem Verflüssiger-Wärmetauscher Taschen, die die Außenluft in Richtung auf den Boden der U-Form des Verflüssiger-Wärmetauschers lenken. Die Taschen sind somit größere Hohlräume zwischen dem Verflüssiger-Wärmetauscher und der Innenstruktur des Gehäuses. Oder mit anderen Worten: Um den Verflüssiger-Wärmetauscher herum besteht Platz für das Führen von Außenluft. Dabei lenken die Taschen insbesondere die Außenluft in Richtung auf den Boden der U-Form, also in Richtung auf den Teil des Buchstabens U, von dem die beiden seitlichen Schenkel abzweigen. Die zu der Basis oder auch Spitze (als alternative Bezeichnungen für Boden) des U geführte Luft ist dabei vorzugweise die über die Längsseiten angesaugte Außenluft. Damit wird auch dafür Sorge getragen, dass möglichst keine erwärmte Außenluft zurück in die Klimaanlage gelangt. Dies vor allem im Rahmen der Ausgestaltung, dass die erwärmte Außenluft über die hintere Stirnseite ausgeblasen wird.

Eine Ausgestaltung sieht vor, dass der Verflüssiger-Wärmetauscher sich hinter dem mindestens einen Luftzugang befindet, und dass das Verflüssiger-Gebläse die Außenluft durch den Verflüssiger-Wärmetauscher hindurchzieht. In einer Ausgestaltung sind mehrere Luftzugänge vorhanden und der Verflüssiger-Wärmetauscher erstreckt sich entlang der Luftzugänge und befindet sich vorzugsweise hinter den Mündungen der Luftzugänge.

In einer Ausgestaltung wird nur ein Teil der Struktur der Luftausgänge durch das Gehäuse selbst gebildet. Der Rest und insbesondere die unteren Abschnitte der Kanäle der Luftausgänge ergeben sich im verbauten Zustand durch die Oberfläche, auf welcher die Klimaanlage montiert wird. So bildet also beispielsweise ein Fahrzeugdach eine Begrenzung der Luftausgänge.

Im Einzelnen gibt es eine Vielzahl von Möglichkeiten, die erfindungsgemäße Klimaanlage auszugestalten und weiterzubilden. Dazu wird verwiesen einerseits auf die dem Patentanspruch 1 nachgeordneten Patentansprüche, andererseits auf die folgende Beschreibung von Ausführungsbeispielen in Verbindung mit der Zeichnung. Es zeigen:
- Fig. 1: eine schematische Darstellung eines Klimageräts,
- Fig. 2a: einen Schnitt durch eine Ausgestaltung einer Klimaanlage,
- Fig. 2b: eine Sicht auf eine räumliche Darstellung der Klimaanlage der Fig. 2a ohne einen Teil des Gehäuses,
- Fig. 3a: eine vergrößerte Darstellung des Schnitts der Fig. 2a im Bereich des Verdampfers,
- Fig. 3b: eine Draufsicht auf den Bereich des Verdampfers,
- Fig. 3c: einen Ausschnitt ähnlich der Fig. 3a durch eine alternative Ausgestaltung des Bereichs des Verdampfers,
- Fig. 4: eine Draufsicht auf die Auflagefläche unterhalb des Verdampfer-Wärmetauschers,
- Fig. 5: einen Teil einer räumlichen Darstellung des Bereichs des Verdampfers,
- Fig. 6: einen Blick auf die obere Hälfte des Gehäuses der Klimaanlage,
- Fig. 7: einen Blick auf die Unterseite der Klimaanlage und
- Fig. 8: einen Blick auf die räumliche Darstellung der Unterseite sowie der hinteren Stirnseite der Klimaanlage.

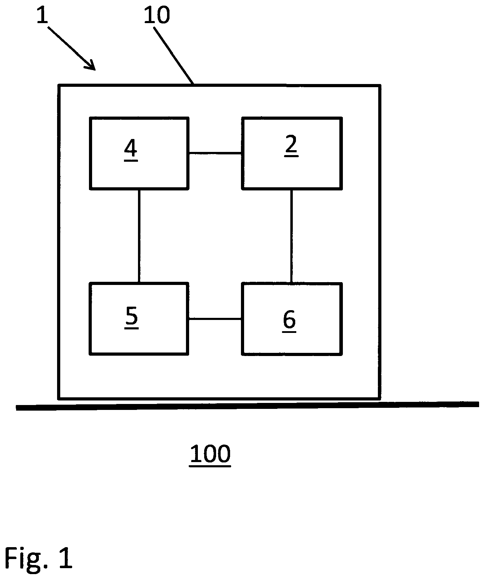

Die Fig. 1 zeigt schematisch den Aufbau einer Klimaanlage 1 zum Kühlen eines Raumes 100. Der damit realisierte Kühlkreislauf oder Kälteprozess ist beispielsweise in der WO 2007/042065 A1 beschrieben. Bei dem Raum 100 handelt es sich beispielsweise um den Innenraum eines Wohnwagens oder eines Wohnmobils. Die Klimaanlage 1 ist somit für diesen Anwendungsfall auf dem Fahrzeugdach des Wohnwagens bzw. des Wohnmobils befestigt.

Für den Kälteprozess verdichtet ein Kompressor (eine alternative Bezeichnung ist Verdichter) 2 ein gasförmiges Kältemittel, das damit Wärme aufnimmt und über eine Kältemittelleitung zu einem Verflüssiger (alternative Bezeichnung: Kondensator) 4 transportiert wird.

Im Verflüssiger 4 wird die Wärme des Kältemittels an die Umgebungsluft (oder Außenluft) aus der Umgebung um den Raum 100 herum abgegeben. Die Außenluft wird dabei über ein Verflüssiger-Gebläse 40 angesaugt und nach der Wechselwirkung mit dem Kältemittel in einem Verflüssiger-Wärmetauscher 41 wieder ausgeblasen. Infolge der Abgabe der Wärme verflüssigt sich das verdichtete Kältemittel.

Das flüssige und weiterhin unter hohem Druck stehende Kältemittel wird in einer Expansionseinrichtung 5, die z. B. als Drossel ausgestaltet ist, auf einen niedrigeren Druck entspannt. Dabei kühlt das Kältemittel ab.

Im nächsten Schritt gelangt das Kältemittel zu einem Verdampfer 6, durch den die Luft des zu kühlenden Raumes 100 mittels eines Verdampfer-Gebläses 60 geführt wird. Die Luft überträgt dabei ihre Wärme auf das Kältemittel, welches in den gasförmigen Zustand übergeht. Das gasförmige Kältemittel gelangt schließlich zurück zu dem Kompressor 2, sodass der Kühlkreislauf fortgeführt werden kann.

Der Kreislauf lässt sich auch umkehren, sodass die Vorrichtung 1 als Raumheizung dient.

Die beschriebenen Komponenten der Klimaanlage 1 befinden sich in einem Gehäuse 10, das - wie beispielsweise in der WO 2007/042065 A1 dargestellt - je nach Ausgestaltung aus zwei Schalen besteht. Dabei sind das Gehäuse 10 und die Komponenten auch so ausgestaltet und aufeinander abgestimmt, dass das Gehäuse der Befestigung der Komponenten der Klimaanlage 10 durch Formschluss dient.

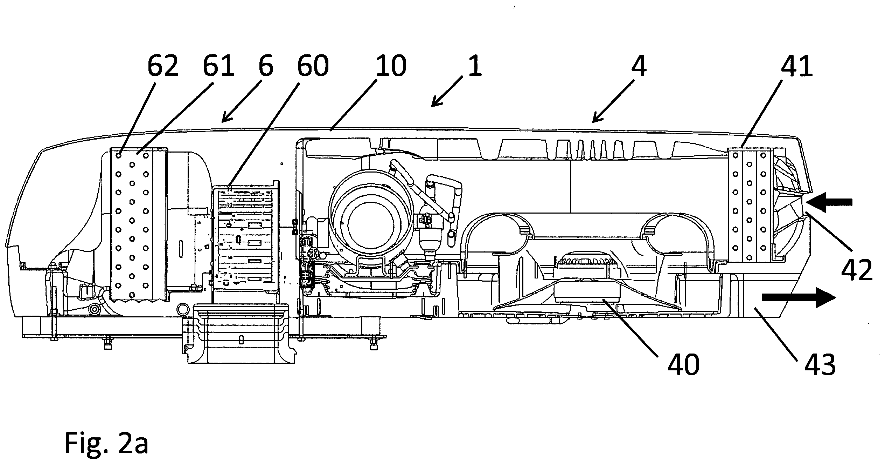

In der Fig. 2a ist ein Schnitt entlang einer Längsachse durch eine Ausgestaltung einer Klimaanlage 1 dargestellt. Rechts und links sind hier somit die Stirnseiten der Klimaanlage 1 dargestellt, wobei im verbauten Zustand die hier linke Stirnseite der Fahrtrichtung zugewandt und die rechte Stirnseite 16 von der Fahrtrichtung abgewandt ist. Dies bezieht sich auf den Fall, dass die Klimaanlage 1 auf dem Dach eines bewegbaren Fahrzeugs, wie beispielsweise einem Wohnwagen oder Wohnmobil, befestigt ist.

Die Klimaanlage 1 verfügt über zwei Wärmetauscher 41, 61 und zwei Gebläse 40, 60. Die Gebläse 40, 60 bewirken - in den funktionalen Abschnitten des Verflüssigers 4 bzw. des Verdampfers 6 - jeweils, dass Luft durch die Wärmetauscher 41, 62 geführt und dabei erwärmt bzw. abgekühlt wird. Im Folgenden werden die Ausgestaltungen der zwei zugeordneten Bereiche der Klimaanlage 1 (also Verdampfer 6 sowie Verflüssiger 4) detailliert und jeweils auch im Rückgriff auf die Fig. 2a beschrieben.

Der eine Wärmetauscher 61 kann dabei auch als innerer oder interner Wärmetauscher bezeichnet werden, da er die innere Luft, also die zu kühlende Luft des Raums 100, kühlt. Dieser Wärmetauscher 61 hat somit Wechselwirkung mit der inneren Luft. Der andere Wärmetauscher 41 dient der Wechselwirkung mit der Außenluft, indem die Wärme des Kältemittels auf die Außenluft übertragen wird. Daher kann dieser Wärmetauscher 41 auch als äußerer oder externer Wärmetauscher bezeichnet werden.

Die beispielhafte Klimaanlage 1 der Fig. 2a ist eine sogenannte Dachklimaanlage, bei der die Hauptkomponenten auf dem Dach des Raumes 100 angeordnet sind, dessen Luft gekühlt werden soll. In der - hier nicht dargestellten - Decke befindet sich dabei ein Durchbruch, durch den die Luft in die Klimaanlage 1 gelangt und von dort wieder - als gekühlte Luft - ausgeblasen wird. Unterhalb der Decke befindet sich dann üblicherweise auch ein sogenannter Luftverteiler zum Verteilen der gekühlten Luft im Innenraum 100.

Die Klimaanlage 1 bewirkt nicht nur das Abkühlen der Raumluft, sondern auch eine Trocknung. Die in der Luft befindliche Feuchtigkeit fällt dabei als Kondenswasser (eine alternativ gebrauchte Bezeichnung ist Kondensat) an und sammelt sich insbesondere am Verdampfer-Wärmetauscher 61.

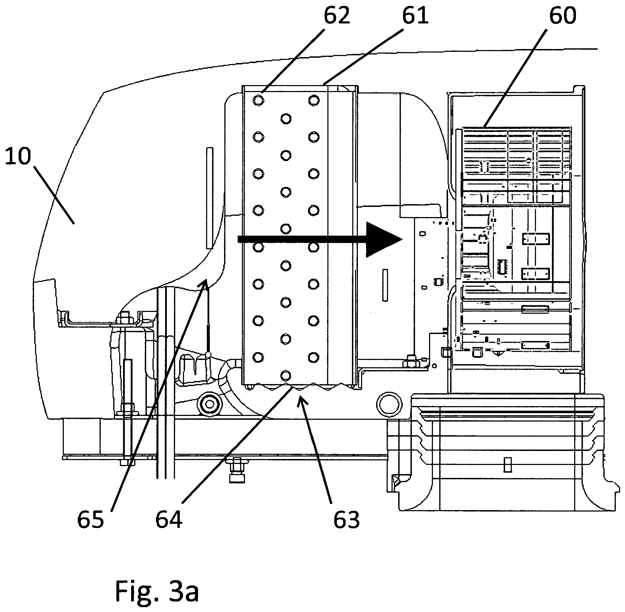

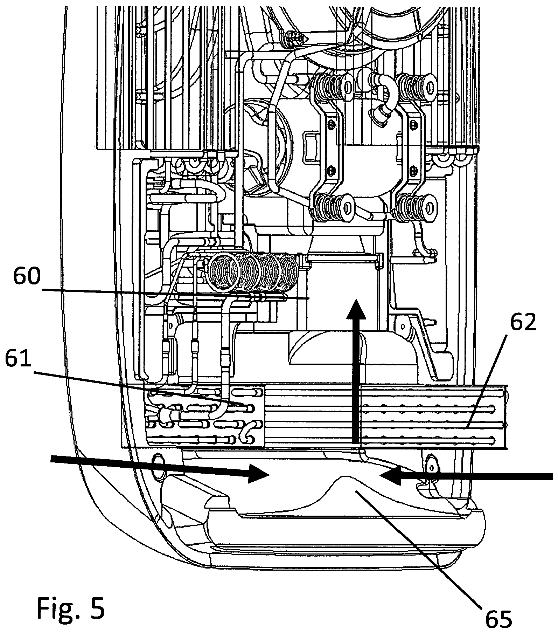

Der in der Fig. 2a dargestellte Verdampfer-Wärmetauscher 61 verfügt über drei Reihen von Röhren 62, durch die das Kältemittel geführt wird. Im Schnitt zeigen sich die Röhren 62 als Kreise. Dies lässt sich auch in der Vergrößerung der Fig. 3a erkennen. Die räumliche Darstellung der Röhren ist z. B. in der Fig. 5 gegeben, in der auch gezeigt wird, wie die einzelnen Röhren 62 für das Kältemittel an den Stirnseiten des Verdampfer-Wärmetauschers 61 miteinander verbunden sind.

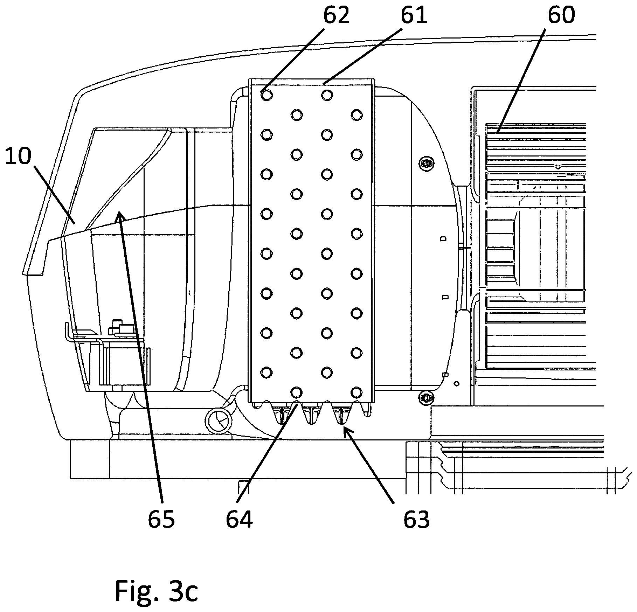

Je nach maximaler Kühlleistung sind unterschiedlich viele Reihen von Röhren 62 vorhanden. So ist in der Fig. 2a zu erkennen, dass auf der rechten Seite noch eine weitere Reihe von Röhren 62 bzw. ein tieferer Verdampfer-Wärmetauscher 61 Platz hätte. Dieser freie Platz wird in der Variante der Klimaanlage 1 der Fig. 3c durch den Verdampfer-Wärmetauscher 61 mit vier Reihen an Röhren 62 ausgefüllt. Der Platz im Gehäuse 10 erlaubt somit die Einbringung von unterschiedlich tiefen Verdampfer-Wärmetauschern 61.

Der Verdampfer-Wärmetauscher 61 steht aufrecht in dem Gehäuse 10 und das Kondenswasser tropft durch die Schwerkraft nach unten. Am Fuß des Verdampfer-Wärmetauschers 61 wird das Kondenswasser dann mit passenden - hier nicht dargestellten - Geometrien oder z. B. durch eine Pumpe abgeführt.

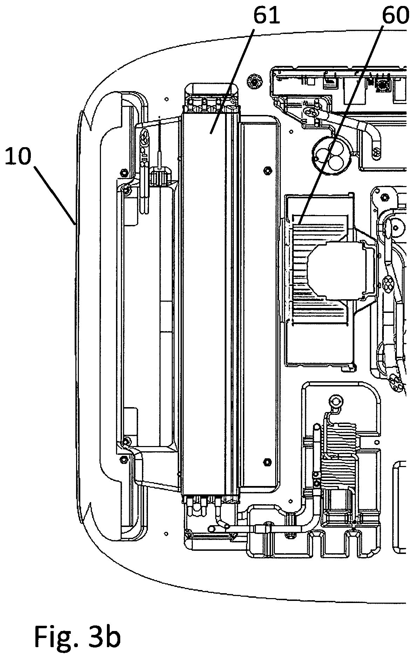

In den Abbildungen Fig. 3a und 3b ist der Bereich um den Verdampfer-Wärmetauscher 61 einer ersten Ausgestaltung sowie in der Fig. 3c einer zweiten Ausgestaltung vergrößert dargestellt. Die Abbildungen Fig. 3a und Fig. 3c zeigen jeweils einen seitlichen Schnitt und die Fig. 3b zeigt einen Blick von oben auf den Bereich, der in der Fig. 3a dargestellt ist.

Der Verdampfer-Wärmetauscher 61 ist im Gehäuse 10 von oben und unten eingeklemmt und wird dadurch vom Gehäuse 10 in seiner Position gehalten. Eine ebensolche Einfassung ist - wie insbesondere in der Fig. 3b zu erkennen - an den Stirnseiten des Verdampfer-Wärmetauschers 61 gegeben, also entlang der Achse, senkrecht zu der hier der Schnitt verläuft. Dieses Fixieren durch Formschluss zwischen Komponenten und Gehäuse 10 ist beispielsweise in der bereits zitierten WO 2007/042065 A1 gezeigt.

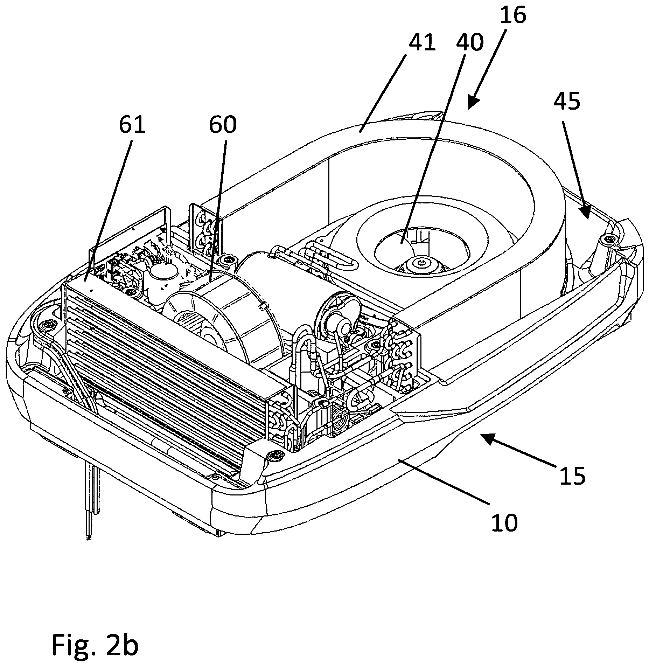

Dass der Verdampfer-Wärmetauschers 61 durch die Strukturen des Gehäuses 10 selbst gehalten wird, zeigt z. B. auch die Fig. 2b. In dieser Abbildung Fig. 2b zeigt sich auch, dass das Verdampfer-Gebläse 60 ebenfalls durch das Gehäuse 10 selbst in seiner Position gehalten wird.

Die zu kühlende (Raum-)Luft wird - in der Fig. 3a durch den Pfeil angedeutet - von links nach rechts in Richtung des Verdampfer-Gebläses 60 durch den Verdampfer-Wärmetauscher 61 bewegt. Siehe auch den mittlere Pfeil in der Fig. 5.

Um möglichst zu verhindern, dass das Kondenswasser von der gekühlten Luft mitgerissen wird, ist hier die Auflagefläche 63 im Gehäuse 10 unterhalb des Verdampfer-Wärmetauschers 61 besonders ausgestaltet (siehe Fig. 3a und Fig. 3c). Weiterhin soll durch diese Ausformung der Auflagefläche 63 verhindert werden, dass Luft unter dem Verdampfer-Wärmetauscher 61 hindurchströmt und somit nicht gekühlt wird.

Wie zu erkennen, handelt es sich nicht um eine flache oder plane Auflagefläche 63, sondern es sind einzelne Rippen 64 vorhanden, die sich unterhalb und entlang der unteren Seite des Verdampfer-Wärmetauschers 61 erstrecken. Zwischen den Rippen 64 befinden sich Täler, in denen sich das Kondenswasser sammeln und in Richtung von - hier nicht dargestellten - Ablauföffnungen abfließen kann. Die Höhe der Rippen 64 bzw. entsprechend die Tiefe der Täler, die somit als Auffangwannen für das Kondenswasser dienen, bestimmt die Menge an Kondenswasser, die aufgenommen werden kann. Das Abfließen aus den Tälern geschieht beispielsweise durch die Wirkung der Schwerkraft oder durch das Einwirken von z. B. einer - hier ebenfalls nicht dargestellten - Pumpe. Wie in den Abbildungen Fig. 3a und Fig. 3c gut zu erkennen, stoßen die unteren Außenkanten des Verdampfer-Wärmetauschers 61 an die äußeren Rippen an und werden daher seitlich von dem Gehäuse 10 umfasst.

Durch die Rippenstruktur wird auf der Seite des Lufteintritts (in den Fig. 3a und 3c jeweils links) hinein in den Verdampfer-Wärmetauscher 61 verhindert, dass Luft fehlerhafterweise unter dem Verdampfer-Wärmetauscher 61 hindurchströmt. Auf derjenigen Seite, auf welcher die abgekühlte Luft den Verdampfer-Wärmetauscher 61 verlässt, wird ein weitere Blockade für die Luft bzw. das Kondenswasser erzeugt.

Weiterhin wird durch die Rippenstruktur Luft, die doch unter den Verdampfer-Wärmetauscher 61 gelangt sein sollte, immer wieder in andere Richtungen (hinauf und hinab entlang der Rippen 64) umgelenkt. Dies reduziert bzw. verhindert das Strömen von Luft unterhalb des Verdampfer-Wärmetauschers 61 und wirkt sich auch darauf aus, dass das Kondenswasser nicht mitgerissen wird.

Die Anzahl und Position der Rippen 64 ist dabei in der dargestellten Variante so ausgeführt, dass sich jeweils unter einer Reihe der Röhren 62 eine Rippe 64 befindet. Jede Rippe 64 leitet die Luft wieder zurück in den Verdampfer-Wärmetauscher 61 und erhöht gleichzeitig den Widerstand für die unterhalb des Verdampfer-Wärmetauschers 61 strömende und damit falsch geleitete Luft. Tropft das Kondenswasser herunter, so wird es in Richtung der Täler geführt, die jeweils an eine Rippe 64 angrenzen. Hier sind vier Rippen 64 vorhanden, sodass auch ein Verdampfer-Wärmetauscher 61 mit vier Reihen von Röhren 62 in den freien Platz (siehe Fig. 3a) auf der rechten Seite aufgenommen werden kann. Dies ist in der Fig. 3c zu erkennen. Bei der Variante der Fig. 3a ist somit eine zusätzliche Rippe 64 vorhanden.

Das Kondenswasser tropf somit nach unten und sammelt sich in den Tälern zwischen den Rippen 64 der Auflagefläche 63. Da der Verdampfer-Wärmetauscher 61 auf den Rippen 64 steht, kann daher das Kondenswasser nicht oder nur zu einem sehr geringen Anteil aus jeweils einem Tal durch den Luftstrom in Richtung des Verdampfer-Gebläses 60 mitgerissen werden.

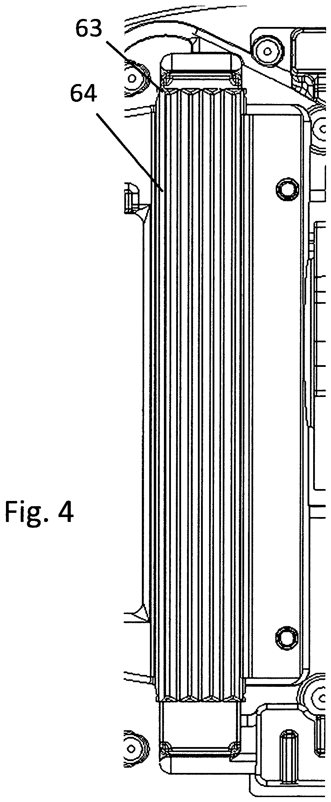

Die Fig. 4 zeigt eine Draufsicht auf die Auflagefläche 63 mit den vier Rippen 64, zwischen denen sich die Täler zum Sammeln des Kondenswassers befinden. Die Auflagefläche 63 hat eine rechteckige Grundform, was zu der rechteckigen Grundfläche des Verdampfer-Wärmetauschers 61 passt.

In der Fig. 3a sowie Fig. 3c zeigt sich im Gehäuse 10 hier zeichnerisch links vor dem Verdampfer-Wärmetauscher 61 eine in den Raum vor dem Verdampfer-Wärmetauscher 61 hineinragende Ausbuchtung 65. Diese Ausbuchtung 65 ist ebenfalls in den Abbildungen Fig. 2a sowie Fig. 5 bis Fig. 7 zu erkennen. Diese Ausbuchtung 65 ist Teil des entsprechend geformten Gehäuses 10, das z. B. entsprechend gespritzt und/oder gegossen worden ist.

Die - sich hin auf die von der Luft angeströmte Seite des Verdampfer-Wärmetauscher 61 herausragende -Ausbuchtung 65 ragt in den Raum hinein, in den die zu kühlende Raumluft geführt wird, um den Verdampfer-Wärmetauscher 61 zu passieren (siehe den Pfeil in der Fig. 3a sowie den mittleren Pfeil in der Fig. 5).

Wie in der Fig. 5 durch die zwei horizontal verlaufenden Pfeile angedeutet, gelangt die Luft seitlich (also von rechts und links) in den Bereich vor dem Verdampfer-Wärmetauscher 61 und bewegt sich von dort in Richtung des Verdampfer-Gebläses 60. Die Ausbuchtung 65 ist dabei ähnlich einem Wellenberg oder einer Düne ausgestaltet, sodass durch die glatt verlaufenden Seiten die Luft in den Bereich vor die Spitze der Ausbuchtung 65 geführt wird.

In der Fig. 5 ist zudem zu erkennen, dass die Ausbuchtung 65 leicht asymmetrisch ist und daher zwei unterschiedlich ausgeprägte Flanken aufweist. Durch die Ausbuchtung 65 werden die seitlichen Luftströme in Richtung des Verdampfer-Wärmetauschers 61 gelenkt. Der Schwerpunkt oder die Spitze der Ausbuchtung 65 als deren maximale Erstreckung in Richtung auf den Verdampfer-Wärmetauscher 61 befindet sich dabei auf der Höhe des Verdampfer-Gebläses 60, welches selbst gegenüber einer Längsachse der Klimaanlage 1 versetzt ist.

Durch die Ausbuchtung 65 findet eine teilweise Verengung des Raums vor dem Verdampfer-Wärmetauscher 61 statt. In diesen Raum gelangt die Luft jeweils seitlich, sodass von diesen beiden Seiten jeweils auch der größte Raum zwischen der Ausbuchtung 65 als Verteilerstruktur und dem Verdampfer-Wärmetauscher 61 besteht. Die Außenkontur der Seite des Verdampfer-Wärmetauscher 61, die der Ausbuchtung 65 zugewandt ist, ist im Wesentlichen durch eine flache Rechteckform gegeben.

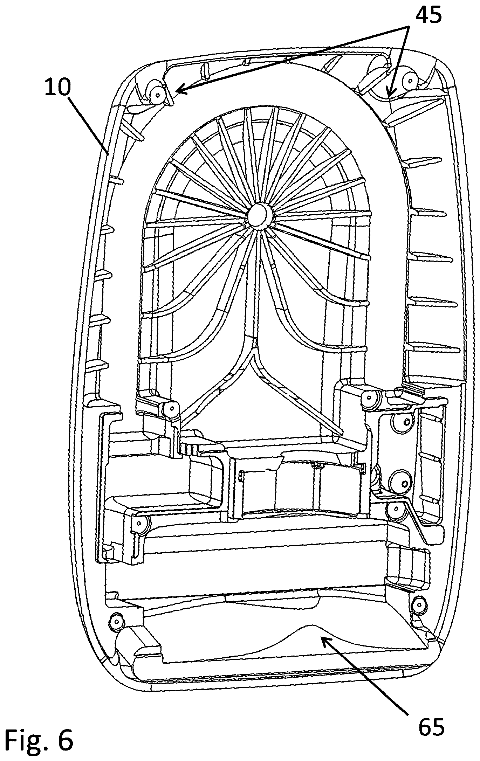

Die Position der Ausbuchtung 65 relativ zum Verdampfer-Gebläse 60 ist beispielsweise anhand der Innenseite der oberen Gehäusehälfte der Fig. 6 zu erkennen. Hier zeichnerisch unten befindet sich die Verteilerstruktur 65. Oberhalb der maximalen Erstreckung der Ausbuchtung 65 befinden sich zunächst die vom Grundriss her rechteckige Aussparung für den Verdampfer-Wärmetauscher 61 und darüber - und von der Mitte aus hier zeichnerisch nach rechts versetzt - die Aussparung für das Verdampfer-Gebläse 60. Die Ausbuchtung 65 erhebt sich somit hinein in den projizierten Bereich (oder vor der Verlängerung nach unten) vor der Position des Verdampfer-Gebläses 60 (siehe z. B. die Fig. 5). Der Schwerpunkt (oder die Spitze) der Ausbuchtung 65 ist jedoch nicht entlang der Mittenachse des Verdampfer-Gebläses 60 angeordnet, sondern ist leicht versetzt dazu.

Wie in der Fig. 3a, Fig. 3c sowie der Fig. 6 zu erkennen ist, erstreckt sich die Ausbuchtung 65 auch entlang der Höhe des Gehäuses 65 bzw. entlang der Höhe des Verdampfer-Wärmetauschers 61 mit einer besonderen Form.

Der - hier entlang der Höhe des Gehäuses 10 und daher im verbauten Zustand auch entlang der Erdanziehung betrachtete - Verlauf der Ausbuchtung 65 beengt den oberen Raum vor dem Verdampfer-Wärmetauscher 61 zunächst auf einen sehr schmalen Bereich, um dann in einer Art von S-Form den Bereich zu erweitern. Der Raum vor dem unteren Teil des Verdampfer-Wärmetauschers 61 ist somit deutlich größer und weiter als der Raum vor dem oberen Teil. Durch die Einengung im oberen Bereich im Raum vor dem Verdampfer-Wärmetauscher 61 wird die seitlich einströmende Luft quasi nach unten gedrückt.

Diese seitlich und im Höhenverlauf unterschiedliche Form der Ausbuchtung 65 ist insbesondere in der Fig. 6 gut zu erkennen. Die Verteilerstruktur 65 beengt somit den Raum vor der von der Luft angeströmten Seite des Verdampfer-Wärmetauschers 61 nicht nur von den beiden Seiten (rechts und links) hin zur Mitte, sondern auch von unten nach oben (jeweils ausgehend vom verbauten Zustand und somit vorzugsweise relativ zu dem Fahrzeugdach, auf welchem die Klimaanlage 1 angebracht ist). Das größte Volumen besteht somit an den rechten und linken Seiten und unten in Erdfeldrichtung bzw. in Richtung des Fahrzeugdachs, wenn die Klimaanlage 1 z. B. auf einem Dach moniert worden ist.

Die Ausbuchtung 65 sorgt für eine gleichmäßige Geschwindigkeitsverteilung der Luft vor dem Verdampfer-Wärmetauscher 61 und verbessert damit dessen Kühlverhalten, da er gleichmäßig durchströmt wird. Ein anderer Vorteil besteht darin, dass das Luftvolumen gleichmäßig verteilt und daher auch der Verdampfer-Wärmetauscher 61 gleichmäßig von der Luft durchströmt wird. Dies verbessert ebenfalls die Kühlleistung. Die zu kühlende Luft wird somit aufgefächert und möglichst über die volle Seite des Verdampfer-Wärmetauschers 61 verteilt.

In der Fig. 2a ist (hier zeichnerisch auf der rechten Seite) der Teil der Klimaanlage 1 zu erkennen, in den hinein Außenluft angesogen, durch einen Verflüssiger-Wärmetauscher 41 geführt und in den Außenraum um den zu kühlenden Raum herum wieder ausgeblasen wird. Dabei wird die Wärme, die der Innenluft entzogen wurde, auf die Außenluft übertragen. Dem Ansaugen und Ausblasen dient das Verflüssiger-Gebläse 40.

Zu erkennen ist in der Fig. 2b, dass sich das Verflüssiger-Gebläse 40 und der Verflüssiger-Wärmetauscher 41 im Bereich der hinteren Stirnseite 16 des Gehäuses 10 befinden. Zwischen den beiden Stirnseiten 16 befinden sich die Längsseiten 15, von denen in der Fig. 2b nur eine zu sehen ist.

In der Fig. 2b ist weiterhin die besondere Form des Verflüssiger-Wärmetauschers 41 zu erkennen. Dabei handelt es sich um die Form des Großbuchstabens "U" oder als alternative Bezeichnung um eine Hufeisenform. Das Verflüssiger-Gebläse 40 wird somit bis auf die Öffnung des "U" vollständig vom Verflüssiger-Wärmetauscher 41 umgeben. Das Verflüssiger-Gebläse 40 befindet sich in Richtung des geschlossenen Endes der U-Form. Das Verflüssiger-Gebläse 40 bewegt die Luft in die Ebene unterhalb des Verflüssiger-Wärmetauscher 41 und damit - in Folge der Führung durch die Struktur der Luftausgänge 43 - auch in Richtung des geschlossenen Endes des U-Form. Der Verflüssiger-Wärmetauscher 41 befindet sich damit auch oberhalb der Ebene, in der die erwärmte Außenluft aus der Klimaanlage 1 ausgeführt wird. Das geschlossene Ende des U-förmigen Verflüssiger-Wärmetauschers 41 ist somit in der Richtung der Stirnseite 16 bzw. der Ausblasseite 11 angeordnet. Oder mit anderen Worten: Die U-Form ist in Richtung des Innenraums des Gehäuses 10 bzw. der Klimaanlage 1 geöffnet. Dabei ist die Öffnung des U dem Innenraum der Klimaanlage 1 zugewandt. Somit ist also die Fläche möglichst groß, über die die Außenluft durch den Verflüssiger-Wärmetauscher 41 hindurch zu dem Verflüssiger-Gebläse 40 und über dieses wieder hinaus aus der Klimaanlage 1 gelangen kann. Die geschlossene Seite der U-Form

Weiterhin zeigt die Fig. 2b, dass der Verflüssiger-Wärmetauscher 41 zu den beiden Seitenflanken des Gehäuses 10 einen größeren Abstand aufweist, der an der hinteren Stirnseite 16 des Gehäuses 10 schließlich in Taschen 45 mündet, von denen hier nur eine zu erkennen ist. In diesen Taschen 45 wird verstärkt die von den Längsseiten 15 einströmende Außenluft in Richtung des geschlossenen Endes der U-Form des Verflüssiger-Wärmetauschers 41 umgelenkt. Dies trägt auch dazu bei, dass die meiste Außenluft von den Längsseiten 15 des Gehäuses 10 stammt. Damit wird der potentielle Anteil an angesaugter erwärmter Außenluft weiter reduziert.

In einer - hier nicht dargestellten - Ausführung befindet sich an der hinteren Stirnseite 16 keine Öffnung für das Einsaugen der Außenluft, sondern nur für das Ausstoßen der Außenluft, die den Verflüssiger-Wärmetauschers 41 passiert hat.

Die Form der Taschen 45 lassen sich anhand der Oberseite des Gehäuses 10 erkennen, die in der Fig. 6 gezeigt ist.

An dem hier zeichnerisch oberen Ende, das die hintere Stirnseite ist, sieht man den U-förmigen Verlauf des Verflüssiger-Wärmetauscher 41 und den Raum um diesen herum. Durch die im Wesentlichen rechteckige Form des Gehäuses 10 ergeben sich die Taschen 45 um den Boden des Großbuchstabes U des Verflüssiger-Wärmetauschers 41. An den beiden Längsseiten verlaufen die Rippen zwischen den Luftzugängen.

In der Fig. 2a ist durch die zwei Pfeile angedeutet, dass der Ansaugbereich - entlang der Erdachse bzw. im verbauten Zustand fort vom Fahrzeugdach - oberhalb des Ausstoßbereichs liegt. Die erwärmte Luft wird somit in Fahrzeugdachnähe ausgeblasen. Dies bewirkt, dass die Luft eine höhere Geschwindigkeit hat und auseichend weit von den Ansaugöffnungen 42 fortbewegt wird. Dadurch wird der Vorteil erreicht, dass möglichst nur die normal temperierte Außenluft und nicht die durch die Klimaanlage 1 bereits erwärmte Luft angesaugt wird. Dies verstärkt die Effektivität der Klimaanlage 1, da sich so mehr Wärme abtransportieren lässt.

Weiterhin ist in der Fig. 2a zu erkennen, dass sich der Verflüssiger-Wärmetauscher 41 im Wesentlichen unmittelbar an den Luftzugang 42 im Gehäuse 10 anschließt. Somit wird die Umgebungsluft von dem Verflüssiger-Gebläse 40 durch den Verflüssiger-Wärmetauscher 41 hindurchgezogen. Nach der Wärmeübertragung strömt die wärmere Luft durch das Verflüssiger-Gebläse 41 hindurch und dann zurück in die Umwelt.

Insgesamt strömt die Außenluft aus einer vom Fahrzeugdach entfernteren Lage in die Klimaanlage 1 hinein, passiert den Verflüssiger-Wärmetauscher 41 und wird dann in eine tiefere Lage umgelenkt und in Nähe des Fahrzeugdaches über den Luftausgang 43 ausgeblasen.

Zu sehen ist in der Fig. 2a nur der hintere Lufteingang 42 sowie der sich darunter befindliche Luftausgang 43. Dabei befinden sich der Eingang 42 und der Ausgang 43 übereinander und am hinteren Ende des Gehäuses 10. Im montierten Zustand auf einem Fahrzeugdach ist die Stirnseite 16 des Gehäuses 10 bzw. der Klimaanlage 1 in der Regel entgegen der Fahrtrichtung angeordnet. Ebenfalls ist zu erkennen, dass der Verflüssiger-Wärmetauscher 41 über drei Reihen von Röhren verfügt.

In der Fig. 2a ist zu sehen, dass sich ein Lufteingang 42 für die Umgebungsluft an der entgegen der Fahrtrichtung befindlichen Stirnseite 16 der Klimaanlage 1 befindet. An dieser hinteren Stirnseite 16 befindet sich dabei insbesondere auch der Verflüssiger-Wärmetauscher 41. Diese Stirnseite 16 dient zugleich als - insbesondere einzige - Ausblasseite 11 für das Ausblasen der erwärmten Außenluft und als Einzugsseite 12 für die Außenluft.

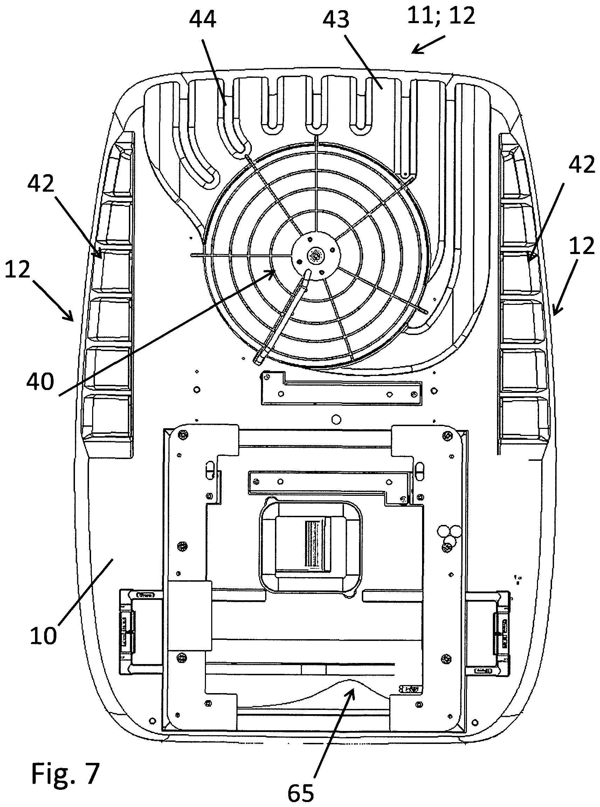

Die hintere Stirnseite 16 befindet sich zeichnerisch oben auf der Fig. 7. Die Fig. 7 zeigt die Unterseite der Klimaanlage 1 und somit die Seite, die im verbauten Zustand auf dem Fahrzeugdach aufliegt.

Im oberen - oder im verbauten Zustand hinteren - Bereich ist der Gebläseträger für das Verflüssiger-Gebläse 40 zu erkennen. Entlang den beiden Längsseiten 15, die somit als Einzugsseiten 12 für die Außenluft dienen, befinden sich weitere Lufteingänge 42. Insgesamt verfügt die Klimaanlage 1 in ihrem von der Fahrtrichtung abgewandten Bereich an allen drei äußeren Seiten, die damit als Einzugsseiten 12 bezeichnet werden können, über Lufteingänge 42 für die Außenluft. Die Lufteingänge 42 (von denen in der Sicht der Fig. 7 die einzelnen Schächte zu erkennen sind) an den Längsseiten 15 reichen dabei sehr nahe an die obere Stirnseite 16 der Klimaanlage heran. 1 Somit wird der Verflüssiger-Wärmetauscher 41 von drei Seiten fast vollumfänglich von der Außenluft durchströmt.

Die erwärmte Luft wird nur über die - in der Fig. 7 zeichnerisch obere - Stirnseite 16 der Klimaanlage 1 und zwar in Fahrzeugdachnähe - und damit tiefer als die Schicht der angesaugten Umgebungsluft - ausgeblasen.

In der dargestellten Ausgestaltung sind acht Luftausgänge 43 vorhanden, zwischen denen sich Trägerkomponenten 44 befinden. Auf diesen Trägerkomponenten 44 ruht der Verflüssiger-Wärmetauscher 41 (siehe Fig. 2a). Die Trägerkomponenten 44 bilden somit gleichzeitig die Begrenzungen der Luftausgänge 43 und die Haltestruktur für den Verflüssiger-Wärmetauscher 41. Dies trägt zur Kompaktheit der Klimaanlage 1 bei und ermöglicht die erhöhte Anordnung des Verflüssiger-Wärmetauschers 41 relativ zu den Luftausgängen 43. Weiterhin erlauben die Trägerkomponenten 44 die Verengung der Luftausgänge 43, sodass ein Hineingreifen verhindert werden kann. Das Hineingreifen ist insbesondere deshalb gefährlich, da man sonst zu dem Verflüssiger-Gebläse 40 gelangen könnte.

Wie in der Fig. 7 zu erkennen, verlaufen die Luftausgänge 43 in ihren jeweiligen Endbereichen rohrförmig und parallel zueinander. Damit werden Verwirbelungen verhindert und wird erreicht, dass sich die Luft nach dem Verlassen der Luftausgänge 43 möglichst geradlinig weiterbewegt. Dies dient insgesamt dem Ziel, dass die erwärmt Luft möglichst ungestört und daher möglichst weit von der Klimaanlage fortgeführt wird. Die Auswurfweite der Luft wird somit erhöht.

Die in der Fig. 7 dargestellte Unterseite des Gehäuses 10 bildet dabei nur einen Teil der Kanäle der Luftausgänge 43, über welche die Luft nach außen geführt wird. Der Boden dieser Kanäle bildet im montierten Zustand das Fahrzeugdach selbst, auf welchem die Klimaanlage 1 angebracht ist.

Von dem kreisförmigen Verflüssiger-Gebläse 40 zweigen die Luftausgänge 43 mit breiten Anfangsbereichen ab, um dann nach einem möglichst großen und sich lang erstreckenden Bereich in die genannten rohrförmigen Endbereichen zu münden. Zu erkennen ist, dass die Luftausgänge 43 insgesamt eine wirbelähnliche Form aufweisen. Alternativ kann zumindest der innere Bereich um das Verflüssiger-Gebläse 40 herum auch als Form eines Schneckenhauses verstanden werden. Dabei hat der hier rechts befindliche Luftausgang 43 die längste Erstreckung. Die Struktur ist dabei abhängig von der Drehrichtung des Verflüssiger-Gebläses 40.

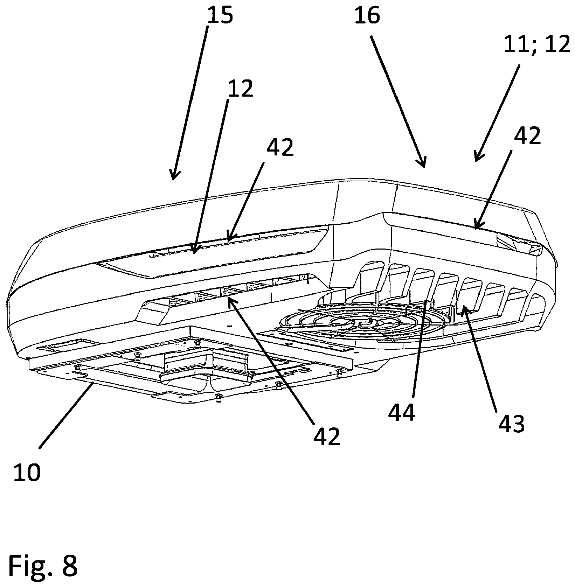

In der Fig. 8 ist ebenfalls zu erkennen, dass die Außenluft von drei Einzugsseiten 12 des Gehäuses 10 eingesaugt und nur in eine Ausblasseite 11 hinein abgeführt wird. Entsprechend sind hier auf zwei Seiten (Längsseite 15 und hintere Stirnseite 16) die Luftzugänge 42 und nur auf einer Seite (hintere Stirnseite 16) ein Luftausgang 43 zu erkennen. Der Luftausgang 43 befindet sich auf derjenigen Ausblasseite 11, die sich im auf einem Fahrzeugdach z. B. eines Wohnwagens oder eines Wohnmobils verbauten Zustand entgegen der Fahrtrichtung befindet. Die durch die Wechselwirkung mit dem Verflüssiger-Wärmetauscher 41 erwärmte Außenluft wird daher beim Fahren noch durch den Fahrtwind mitgerissen. Die Luftzugänge 42 an den Längsseiten 15 bestehen dabei aus den einzelnen Schächten und einer großen schlitzähnlichen Öffnung darüber. Der einzelne Schlitz des Luftzugangs 42 an der hinteren Stirnseite 16 ist schmäler als die beiden seitlichen Schlitze auf den Längsseiten 15.

An dieser - im verbauten Zustand hinteren - Stirnseite 16 des Gehäuses 10 ist auch gut zu erkennen, wie die acht Luftausgänge 43 geradlinig und parallel zueinander münden, damit die ausgestoßene und erwärmte Außenluft möglichst weit fortgeblasen wird. Die Luft wird somit jeweils in die gleiche Richtung ausgeblasen.

Zwischen den Luftausgängen 43 befinden sich die stegförmigen Trägerkomponenten 44. Durch die Trägerkomponenten 44 stellt sich noch der Vorteil ein, dass ein Hereingreifen von Menschen hinein in die Luftausgänge 43 verhindert wird.

Auch in der Fig. 8 ist zu sehen, dass die Luftausgänge 43 nach unten offen sind. Dieser Boden der Luftausgänge 43 ergibt sich erst im montierten Zustand durch die Auflagefläche, bei der es sich vorzugsweise um ein Fahrzeugdach eines Wohnwagens oder Wohnmobils handelt. Die Trägerkomponenten 44 weisen hierfür eine ausreichende Tiefe auf, sodass sie auf der Auflagefläche nach der Montage aufsitzen.

## Patentansprüche

1. Klimaanlage (1) zum Kühlen von Luft,
mit einem Verdampfer-Wärmetauscher (61),
wobei die zu kühlende Luft den Verdampfer-Wärmetauscher (61) passiert,
wobei vor dem Verdampfer-Wärmetauscher (61) eine Verteilerstruktur (65) angeordnet ist,
wobei die Verteilerstruktur (65) die zu kühlende Luft gleichmäßig über eine der Verteilerstruktur (65) zugewandte Seite des Verdampfer-Wärmetauschers (61) verteilt, wobei die Verteilerstruktur (65) über eine Ausbuchtung verfügt, die sich in Richtung des Verdampfer-Wärmetauschers (61) erhebt,
**dadurch gekennzeichnet, dass** die Ausbuchtung (65) eine Spitze als maximale Erstreckung in Richtung auf den Verdampfer-Wärmetauscher (61) aufweist,
wobei die Ausbuchtung (65) die zu kühlende Luft in einen Bereich vor der Spitze der Ausbuchtung (65) führt,
wobei die Ausbuchtung (65) derartig ausgestaltet und relativ zum Verdampfer-Wärmetauscher (61) angeordnet ist, dass ein Abstand zwischen der Ausbuchtung (65) und dem Verdampfer-Wärmetauscher (61) entlang eines Höhenverlaufs des Verdampfer-Wärmetauschers (61) abnimmt, und
wobei es sich bei der Ausbuchtung (65) um eine Art von Welle handelt, deren Flanken sich in Richtung der Seiten erstrecken, von denen die zu kühlende Luft herangeführt wird.

2. Klimaanlage (1) nach Anspruch 1,
wobei die Klimaanlage (1) ein Verdampfer-Gebläse (60) aufweist,
wobei das Verdampfer-Gebläse (60) relativ zum Verdampfer-Wärmetauscher (61) gegenüber der Verteilerstruktur (65) angeordnet ist, und
wobei die Spitze als maximale Erstreckung der Ausbuchtung (65) innerhalb einer Projektion einer Wirkfläche eines Verdampfer-Gebläses (60) angeordnet ist.

3. Klimaanlage (1) nach Anspruch 1 oder 2,
wobei die Klimaanlage (1) ein Gehäuse (10) aufweist,
wobei sich der Verdampfer-Wärmetauscher (61) in dem Gehäuse (10) befindet, und wobei die Ausbuchtung (65) ein Teil des Gehäuses (10) ist.

## Claims

1. An air conditioning system (1) for the cooling of air,
comprising an evaporator heat exchanger (61),
wherein the air to be cooled passes through the evaporator heat exchanger (61),
wherein a distributor structure (65) is arranged upstream of the evaporator heat exchanger (61),
wherein the distributor structure (65) uniformly distributes the air to be cooled over a side of the evaporator heat exchanger (61) facing the distributor structure (65),
wherein the distributor structure (65) has a bulge that rises toward the evaporator heat exchanger (61),
**characterized in that** the bulge (65) has a tip as the maximum extent toward the evaporator heat exchanger (61),
wherein the bulge (65) guides the air to be cooled into an area in front of the tip of the bulge (65),
wherein the bulge (65) is configured and arranged in relation to the evaporator heat exchanger (61) such that a distance between the bulge (65) and the evaporator heat exchanger (61) decreases along a height profile of the evaporator heat exchanger (61), and
wherein the bulge (65) is a kind of wave the flanks of which extend toward the sides from which the air to be cooled is supplied.

2. The air conditioning system (1) according to claim 1,
wherein the air conditioning system (1) includes an evaporator fan (60),
wherein the evaporator fan (60) is arranged opposite the distributor structure (65) relative to the evaporator heat exchanger (61), and
wherein the tip as the maximum extent of the bulge (65) is arranged within a projection of an effective area of an evaporator fan (60).

3. The air conditioning system (1) according to claim 1 or 2,
wherein the air conditioning system (1) includes a housing (10),
wherein the evaporator heat exchanger (61) is located within the housing (10), and
wherein the bulge (65) is a part of the housing (10).

## Revendications

1. Installation de climatisation (1) pour le refroidissement d'air,
comprenant un échangeur de chaleur d'évaporateur (61),
l'air à refroidir passant à travers l'échangeur de chaleur d'évaporateur (61),
une structure de distribution (65) étant agencée en amont de l'échangeur de chaleur d'évaporateur (61),
la structure de distribution (65) distribuant l'air à refroidir uniformément sur une face de l'échangeur de chaleur d'évaporateur (61) qui est tournée vers la structure de distribution (65),
la structure de distribution (65) présentant une échancrure qui s'élève en direction de l'échangeur de chaleur d'évaporateur (61),
**caractérisée en ce que** l'échancrure (65) présente une pointe en tant qu'extension maximale en direction sur l'échangeur de chaleur d'évaporateur (61),
l'échancrure (65) guidant l'air à refroidir dans une zone devant la pointe de l'échancrure (65),
l'échancrure (65) étant réalisée et agencée par rapport à l'échangeur de chaleur d'évaporateur (61) de sorte qu'une distance entre l'échancrure (65) et l'échangeur de chaleur d'évaporateur (61) diminue le long d'un cours en hauteur de l'échangeur de chaleur d'évaporateur (61), et
l'échancrure (65) étant une sorte d'onde dont les flancs s'étendent en direction des faces depuis lesquelles l'air à refroidir est amenée.

2. Installation de climatisation (1) selon la revendication 1,
l'installation de climatisation (1) présentant une soufflante d'évaporateur (60),
la soufflante d'évaporateur (60) étant agencée en face de la structure de distribution (65) par rapport à l'échangeur de chaleur d'évaporateur (61), et
la pointe en tant qu'extension maximale de l'échancrure (65) étant agencée dans une projection d'une surface effective d'une soufflante d'évaporateur (60).

3. Installation de climatisation (1) selon la revendication 1 ou 2,
l'installation de climatisation (1) présentant un boîtier (10),
l'échangeur de chaleur d'évaporateur (61) se trouvant dans le boîtier (10), et
l'échancrure (65) faisant partie du boîtier (10).
